**Europäisches Patentamt**

**European Patent Office**

**Office européen des brevets**

(11) Veröffentlichungsnummer: **0 204 194**
**B1**

# EUROPÄISCHE PATENTSCHRIFT

(45) Veröffentlichungstag der Patentschrift:
**31.01.90**

(21) Anmeldenummer: **86106647.0**

(22) Anmeldetag: **15.05.86**

(51) Int. Cl.⁴: **A01B 59/043**, B25G 1/04,
F16D 3/06

(54) Teleskopisches Verstellgestänge.

(30) Priorität: **04.06.85 DE 3519987**

(43) Veröffentlichungstag der Anmeldung:
**10.12.86 Patentblatt 86/50**

(45) Bekanntmachung des Hinweises auf die Patenterteilung:
**31.01.90 Patentblatt 90/5**

(84) Benannte Vertragsstaaten:
**AT BE CH DE FR GB IT LI**

(56) Entgegenhaltungen:
AT-B- 346 113
FR-A- 1 564 820
GB-A- 1 593 703
US-A- 2 541 964
US-A- 3 073 135
US-A- 3 105 370

(73) Patentinhaber: **DEERE & COMPANY, 1 John Deere Road, Moline Illinois 61265(US)**

(72) Erfinder: **Göbel, Werner, Pfarrer-Friedrich-Strasse 3, D-6700 Ludwigshafen 29(DE)**
Erfinder: **Zahn, Klaus, Schindelberg 3, D-7524 Östringen 2(DE)**

(74) Vertreter: **Feldmann, Bernhard, DEERE & COMPANY European Office, Patent Department Steubenstrasse 36-42 Postfach 503, D-6800 Mannheim 1(DE)**

## Beschreibung

Die Erfindung betrifft ein teleskopisches Verstellgestänge, insbesondere für die Verstellung einer Hubspindel einer Dreipunktgerätekupplung eines Ackerschleppers, mit einem Außenrohr und einer Innenwelle, die drehfest und axial gleitend miteinander verbunden sind.

Dieses teleskopische Verstellgestänge (AT-B 346 113 und Prospekt Steyr 8120, 153/12/83) erstreckt sich zwischen einer Hubspindel und einer Fahrerkabine eines Ackerschleppers. Die Hubspindel verbindet einen Hubarm mit einem unteren Lenker und besteht aus einem Getriebe, einer Gewindehülse und einer Gewindestange. Sie dient der Anbindung des jeweiligen unteren Lenkers an einen Kraftheber, der den Hubarm verschwenkt. Der Abstand zwischen dem unteren Lenker und dem Hubarm soll zusätzlich veränderbar sein, damit auch die Neigung eines an den Ackerschlepper angebauten Gerätes durch die unterschiedliche Höhenstellung der unteren Lenker mit Bezug auf die Aufstandsebene des Ackerschleppers eingestellt werden kann. Hierzu wird die Gewindehülse über das Getriebe gegenüber der Gewindestange verdreht, wozu das Getriebe eingangsseitig einen Hebel zum manuellen Betätigen aufweist. Ist der Ackerschlepper mit einer Fahrerkabine ausgerüstet und somit der Abstand zwischen einem Fahrersitz und dem Hebel zu groß, dann findet das Verstellgestänge Anwendung. Dieses erstreckt sich dann von dem Getriebeeingang bis in die oder bis in die Nähe der Fahrerkabine, jedenfalls bis zu einer Stelle, die von einem Fahrer vom Fahrersitz aus erreichbar ist. An dieser Stelle ist das obere Ende des Verstellgestänges winkelbeweglich befestigt, und seine teleskopische Ausbildung verhindert das Entstehen von Schäden an dem Verstellgestänge oder an der Hubspindel beim Höhenbewegen des Hubarms.

Bei diesem bekannten Verstellgestänge besteht das Außenrohr aus einem runden zylindrischen Schaftteil, an den sich am unteren Ende ein zylindrischer Sechskantschaftteil anschließt. Der Sechskantschaftteil ist durch Ziehen oder Pressen aus dem runden Schaftteil gebildet und sehr teuer herzustellen. In dem Sechskantschaftteil ist gleitend eine zylindrische, sechskantige, hochwertige Innenwelle geführt, die auf ihrer ganzen Länge als Führung dient.

Diesem bekannten Verstellgestänge haftet der Nachteil an, daß die Innenwelle andauernd mit Sand und Wasser beaufschlagt wird und es so beim Gleiten in dem Sechskantschaftteil zu hohem Verschleiß und schlimmstenfalls zum Materialfraß kommt. Das Verstellgestänge wird letzten Endes funktionslos.

Darüber hinaus ist aus der US-A 2 541 964 eine Hubspindel – hingegen kein Verstellgestänge für eine Hubspindel – bekannt, deren Innenwelle nicht drehfest gegenüber dem Außenrohr angeordnet ist, sondern sich dieser gegenüber drehen kann. Eine endseitig auf die Innenwelle aufgeschraubte Mutter ist im Innern des Außenrohrs drehfest, aber axial gleitend gehalten und bestimmt durch ihre axiale Anlage in dem Außenrohr die maximale Länge der Hubstrebe. Die Innenwelle liegt an der Innenwandung des oberen Bereichs des Außenrohrs gleitend an, so daß Schmutz, der sich auf der Außenfläche der Innenwelle ansetzt, in den Gleitbereich hineingetragen werden und dort zu den gleichen bekannten Ausfallschäden führen kann. Eine Relativbewegung zwischen der Innenwelle und dem Außenrohr der Vorrichtung erfolgt in dem Fall, daß ein über einen unteren Lenker an der Hubspindel angehängtes Gerät Bodenunebenheiten folgt, soweit es der Reibwiderstand zwischen der Innenwelle und dem Außenrohr zuläßt.

Die der Erfindung zugrunde liegende Aufgabe wird darin gesehen, das aus der AT-B 346 113 und dem Prospekt Steyr 8120, 153/12/83 bekannte Verstellgestänge derart weiterzubilden, daß auch unter rauhen Arbeitsbedingungen das Gleitverhalten der Innenwelle gegenüber dem Außenrohr nicht zum Schlechten hin beeinflußt wird.

Diese Aufgabe ist erfindungsgemäß dadurch gelöst worden, daß die Innenwelle einen querschnittsgrößeren und einen querschnittskleineren Abschnitt aufweist, von denen der querschnittsgrößere in drehfester Verbindung mit dem Außenrohr steht und so angeordnet ist, daß er während des gesamten Gleitvorganges auf seiner ganzen Länge in dem Außenrohr anliegt, während zwischen dem querschnittskleineren Abschnitt und der Innenfläche des Außenrohrs ein Spalt verbleibt.

Auf diese Weise ist die Gleitfläche nicht dem Schmutz und dem Wasser ausgesetzt, und der Verschleiß unterbleibt. Durch den Abstand der Innenwelle zum Außenrohr an dem querschnittskleineren Abschnitt gelangt auch der sich auf der Innenwelle abgesetzte Schmutz nicht auf die Gleitfläche, so daß auch eine indirekte Zerstörung der Gleiteigenschaften nicht erfolgt. Auf der Gleitfläche vorgesehenes Schmiermittel wird nicht mit Schmutz benetzt und auch nicht abgerieben, so daß zudem eine ständige Schmierung gewährleistet ist.

Durch die die Erfindung vorteilhaft weiterentwickelnden Merkmale gemäß den Unteransprüchen wird ein einfacher und kostengünstiger Aufbau des Verstellgestänges erzielt. Insbesondere die Verwendung eines Vierkant- und eines Rundrohres, die handelsübliche Abmessungen und Qualitäten haben können, führt hin zu geringen Kosten. Hingegen mußte für die bekannte Innenwelle ein hochwertiger Stahl verwendet werden, um den Verschleiß auf einem vertretbaren Maß zu halten bzw. um bei hohem Gleitwiderstand stabil genug zu sein. Der zwischen der Innenwelle und dem Außenrohr gewünschte Spalt wird auf einfache Weise durch das Umgeben der Innenwelle mittels des Vierkantrohrstückes erreicht, so daß ein Ringspalt in der Materialstärke des Vierkantrohrs entsteht. Zum Optimieren des Gleitverhaltens dient schließlich der Schmiernippel, über den Fett direkt zur Gleitstelle gebracht werden kann, welches auch nicht durch das relative Bewegen des Außenrohrs zur Innenwelle abgewischt wird.

In der Zeichnung ist ein nachfolgend näher beschriebenes Ausführungsbeispiel der Erfindung dargestellt. Es zeigt:

Fig. 1 einen Ackerschlepper mit einer Dreipunktgerätekupplung,

Fig. 2 ein erfindungsgemäßes Verstellgestänge und

Fig. 3 das erfindungsgemäße Verstellgestänge im Schnitt entlang der Linie 3 - 3 in Fig. 2 und in Blickrichtung der zugehörigen Pfeile.

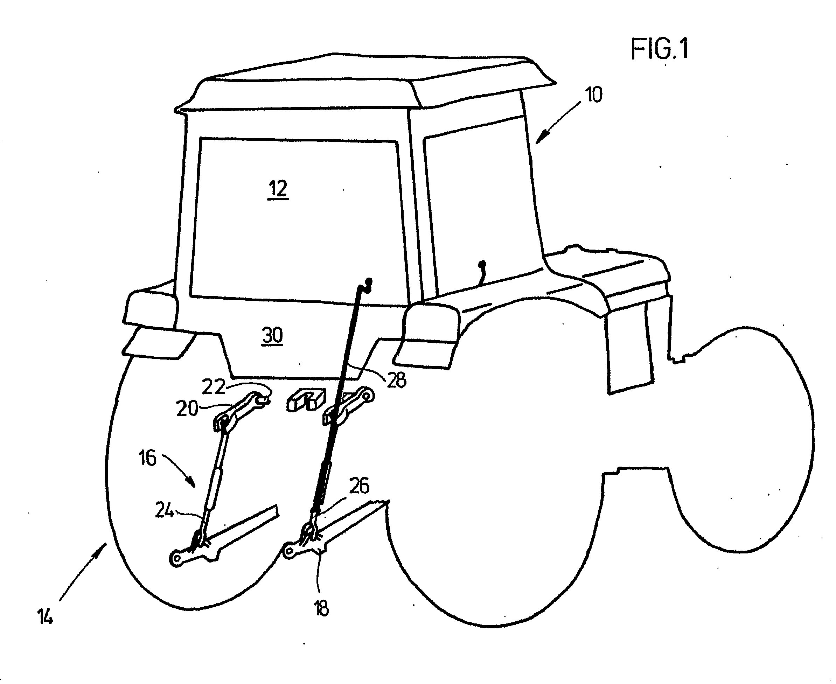

Ein in Fig. 1 nur mit seinen Umrissen dargestellter Ackerschlepper 10 mit einer Fahrerkabine 12 ist an seinem rückwärtigen Ende 14 mit einer Dreipunktgerätekupplung 16 versehen. Diese Dreipunktgerätekupplung 16 besteht im wesentlichen aus zwei unteren Lenkern 18, zwei Hubarmen 20, einer Hubwelle 22, einer linken Hubspindel 24, einer rechten Hubspindel 26 und einem Verstellgestänge 28. Die Hubwelle 22 ragt jeweils endseitig aus einem nicht gezeigten Krafthebergehäuse zur drehfesten Aufnahme der Hubarme 20 und ist mittels einer in dem Krafthebergehäuse untergebrachten Krafthebeanordnung verdrehbar. Die Hubspindeln 24, 26 verbinden die ihnen jeweils zugeordneten unteren Lenker 18 mit den Hubarmen 20, wobei die linke Hubspindel 24 in ihrer Länge fest und die rechte Hubspindel 26 in ihrer Länge veränderbar ausgebildet ist. Die rechte Hubspindel 26, wobei sich die Angabe 'rechts' auf die Vorwärtsfahrtrichtung des Ackerschleppers 10 bezieht, ist zum Längenverändern - wie eingangs beschrieben - herkömmlich ausgebildet und weist ein ebenfalls nicht gezeigtes Getriebe auf, von dem aus sich das erfindungsgemäße Verstellgestänge 28 bis zu der Fahrerkabine 12 erstreckt. Dort ist es an einer Rückwand 30 mittels eines nicht dargestellten Schwenklagers gehalten.

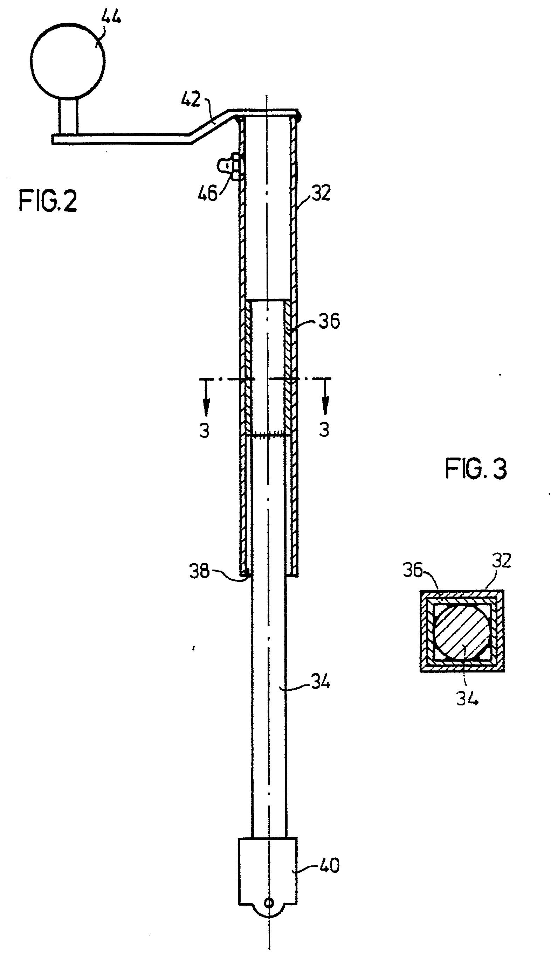

Mit Blick auf Fig. 2 ist zu erkennen, daß das Verstellgestänge 28 aus einem Außenrohr 32 und einer Innenwelle 34 besteht, wobei das Außenrohr 32 die Innenwelle 34 teleskopisch übergreift. Die Innenwelle 34 ist an ihrem sowohl in der Zeichnung wie auch im praktischen Anwendungsfall oberen End mit einem Vierkantrohrstück oder Gleitrohrstück 36 verschweißt, wobei das Gleitrohrstück 36 an dem Innenumfang des Außenrohrs 32 mehr oder weniger anliegt, während die Innenwelle 34 zu dem Innenumfang des Außenrohrs 32 einen Spalt 38 beläßt. Man erkennt ferner, daß das Gleitrohrstück 36 die Innenwelle 34 auf einem Teil ihrer Länge umgibt und selbst nur einen Teil der Länge des Außenrohrs 32 einnimmt. Die Innenwelle 34 ist an ihrem unteren Ende mit einem Kardangelenkanschluß 40 versehen, der auf ein nicht gezeigtes Kardangelenkgegenstück eingangsseitig des Getriebes aufgesetzt wird. Dabei bildet das Gleitrohrstück 36 einen querschnittsgrößeren und die Innenwelle 34 selbst einen querschnittskleineren Abschnitt.

Das Außenrohr 32 ist an seinem oberen Ende mit einem flachen und gekröpften Drehhebel 42 mit einer Griffkugel 44 versehen, wobei der Drehhebel 42 mit seiner Flachseite auf das obere Ende des Außenrohrs 32 aufgeschweißt ist und dieses somit verschließt. Ein Eindringen von Schmutz oder Wasser wird somit verhindert. Etwas unterhalb des Drehhebels 42, jedoch in einer Höhe, die sich mit der möglichen Gleitfläche des Gleitrohrstückes 36 auf dem Innenumfang des Außenrohrs 32 noch deckt, wird das Außenrohr 32 von einem Schmiernippel 46 durchdrungen, so daß von außerhalb Fett auf die Gleitfläche aufgetragen werden kann. Die Bemessung des Verstellgestänges 28 sollte derart erfolgen, daß bei Einnahme seiner größten wirksamen Länge das Gleitrohrstück 36 nicht über das untere Ende des Außenrohres 32 vorsteht.

Aus Fig. 3 geht schließlich hervor, daß das Außenrohr 32 und das Gleitrohrstück 36 einen quadratischen Querschnitt haben, während die Innenwelle 34 aus im Querschnitt rundem Vollmaterial besteht. Dabei bildet der Innenumfang des Außenrohres 32 einen Innenprofilbereich und der Außenumfang des Gleitrohrstückes 36 einen Außenprofilbereich. Das Außenrohr 32, die Innenwelle 34 und das Gleitrohrstück 36 können aus handelsüblichen Halbzeugen gebildet sein. Es ist ersichtlich, daß die Innenwelle 34 mit ihrem Außenumfang an dem Innenumfang des Gleitrohrstückes 36 und das Gleitrohrstück 36 mit seinem Außenumfang an dem Innenumfang des Außenrohres 32 anliegt. Das Außenrohr 32 ist gegenüber dem Gleitrohrstück 36 durch den Formschluß drehfest, und die Innenwelle 34 wird über die Schweißung an dem Gleitrohrstück 36 gehalten. Beim Anheben oder Absenken der Hubarme 20 verschiebt sich das Gleitrohrstück 36 in dem Außenrohr 32 entlang dessen Innenumfang.

Wird über den Drehhebel 42 das gesamte Verstellgestänge 28 in Drehung versetzt, dann erfolgt eine Antriebsübertragung vom Drehhebel 42 aus über das Außenrohr 32 auf das Gleitrohrstück 36, von diesem auf die Innenwelle 34 und über den Kardangelenkanschluß 40 auf das Getriebe.

**Patentansprüche**

1. Teleskopisches Verstellgestänge (28), insbesondere für die Verstellung einer Hubspindel (26) einer Dreipunktgerätekupplung (16) eines Ackerschleppers (10), mit einem Außenrohr (32) und einer Innenwelle (34), die drehfest und axial gleitend miteinander verbunden sind, dadurch gekennzeichnet, daß die Innenwelle (34) einen querschnittsgrößeren und einen querschnittskleineren Abschnitt (36 und 34) aufweist, von denen der querschnittsgrößere in drehfester Verbindung mit dem Außenrohr (32) steht und so angeordnet ist, daß er während des gesamten Gleitvorganges auf seiner ganzen Länge in dem Außenrohr (32) anliegt, während zwischen dem querschnittskleineren Abschnitt und der Innenfläche des Außenrohrs (32) ein Spalt (38) verbleibt.

2. Teleskopisches Verstellgestänge (28) nach Anspruch 1, dadurch gekennzeichnet, daß das Außenrohr (32) ein Vierkantrohr und die Innenwelle (34) ein Rundrohr ist, wobei der querschnittsgrößere Abschnitt (36) durch ein auf das Ende des Rundrohrs aufgesetztes und dort befestigtes Vierkantrohrstück (36) gebildet wird.

3. Teleskopisches Verstellgestänge (28) nach Anspruch 2, dadurch gekennzeichnet, daß das Vierkantrohrstück (36) über das Rundrohr geschoben und auf diesem verschweißt ist.

4. Teleskopisches Verstellgestänge (28) nach einem oder mehreren der vorherigen Ansprüche, dadurch gekennzeichnet, daß ein das Außenrohr (32) bis zur Gleitfläche durchdringender Schmiernippel (46) vorgesehen ist.

## Claims

1. Telescopic adjusting rod (28), especially for the adjustment of a lift rod (26) of a three-point implement hitch (16) of an agricultural tractor (10), with an outer tube (32) and an inner shaft (34), which are connected together rotationally fast and axially sliding, characterized in that the inner shaft (34) has a section of larger cross-section and a section of smaller cross-section (36 and 34), of which the cross-sectionally larger is in rotation-fast connection with the outer tube (32) and is so arranged that it bears over its whole length in the outer tube (32) throughout the whole sliding operation, while a gap (38) is left between the section of smaller cross-section and the inner surface of the outer tube (32).

2. Telescopic adjusting rod (28) according to claim 1, characterized in that the outer tube (32) is a square tube and the inner shaft (34) is a round tube, the section (36) of larger cross-section being formed by a square tubular piece (36) fitted on the end of the round tube and fixed there.

3. Telescopic adjusting rod (28) according to claim 2, characterized in that the square tubular piece (36) is pushed over the round tube and is welded thereto.

4. Telescopic adjusting rod (28) according to one or more of the preceding claims, characterized in that there is provided a grease nipple (46) passing through the outer tube (32) to the sliding surface.

## Revendications

1. Bielle de réglage télescopique (28), en particulier pour la réglage d'une vis de montée (26) d'un attelage d'instruments à trois points (16) d'un tracteur agricole (10), comportant un tube extérieur (32) et un arbre intérieur (34) qui sont reliés entre eux de façon à être solidaires en rotation et à pouvoir coulisser axialement, caractérisée en ce que l'arbre intérieur (34) présente une section de plus grande section droite et une section de plus petite section droite (36 et 34) dont celle de plus grande section droite est solidaire en rotation du tube extérieur (32) et est agencée de façon à être placée pendant tout le processus de glissement sur toute sa longueur dans le tube extérieur (32), tandis qu'il reste un intervalle (38) entre la section de plus petite section droite et la surface intérieure du tube extérieur (32).

2. Bielle de réglage télescopique (28) selon la revendication 1, caractérisée en ce que le tube extérieur (32) est un tube carré et l'arbre intérieur (34) un tube rond, la section de plus grande section droite (36) étant formée par un tronçon de tube carré (36) placé sur l'extrémité du tube rond et fixé à cet endroit.

3. Bielle de réglage télescopique (28) selon la revendication 2, caractérisée en ce qu'on enfile le tronçon de tube carré (36) sur le tube rond et on le soude sur celui-ci.

4. Bielle de réglage télescopique (28) selon une ou plusieurs des revendications précédentes, caractérisée en ce qu'un raccord de graissage (46) traversant le tube extérieur (32) jusqu'à la surface de glissement est prévu.

FIG.1

EP 0 204 194 B1

FIG.2

FIG. 3